**Europäisches Patentamt**

**European Patent Office**

**Office européen des brevets**

(19)

(11) Veröffentlichungsnummer: **0 032 377**
**B1**

(12) # EUROPÄISCHE PATENTSCHRIFT

(45) Veröffentlichungstag der Patentschrift:
**19.09.84**

(51) Int. Cl.³ **C 07 F 7/08, C 07 F 7/12**

(21) Anmeldenummer: **81100052.0**

(22) Anmeldetag: **08.01.81**

(54) Verfahren zum Anlagern von Si-gebundenem Wasserstoff an aliphatische Mehrfachbindung.

(30) Priorität: **10.01.80 DE 3000768**

(43) Veröffentlichungstag der Anmeldung:
**22.07.81 Patentblatt 81/29**

(45) Bekanntmachung des Hinweises auf die Patenterteilung:
**19.09.84 Patentblatt 84/38**

(84) Benannte Vertragsstaaten:
**BE DE FR GB IT NL**

(56) Entgegenhaltungen:
**DE - A - 1 156 073**
**FR - A - 1 509 761**
**US - A - 3 188 299**
**US - A - 3 925 434**

**Die Akte enthält technische Angaben, die nach dem Eingang der Anmeldung eingereicht wurden und die nicht in dieser Patentschrift enthalten sind.**

(73) Patentinhaber: **WACKER-CHEMIE GMBH,**
**Prinzregentenstrasse 22, D-8000 München 22 (DE)**

(72) Erfinder: **Lindner, Tassilo, Dr. Dipl.-Chem.,**
**Neuhauserstrasse 10, D-8261 Mehring-Öd (DE)**
Erfinder: **Engelsberger, Georg, Holzgassen 45,**
**A-5122 Ach (AT)**
Erfinder: **Zeller, Norbert, Dr. Dipl.-Chem.,**
**Schweitzerstrasse 5, D-8263 Burghausen (DE)**
Erfinder: **Riedle, Rudolf, Dr. Dipl.-Chem., Lindenweg 29,**
**D-8263 Burghausen (DE)**

BUNDESDRUCKEREI BERLIN

**Beschreibung**

Es ist bekannt, die Anlagerung von Si-gebundenem Wasserstoff an aliphatische Mehrfachbindung, eine Anlagerung, die auch als »Hydrosilylierung« bezeichnet wird, durch Platinkatalysatoren zu fördern. Hierzu sei z. B. auf US 3 798 252, S. Nitzsche und Mitarbeiter, Wacker-Chemie GmbH, patentiert 19. März 1974, wobei dieser Patentschrift BE-PS 785 343 entspricht, verwiesen.

Gegenüber bisher bekannten Katalysatoren für die Anlagerung von Si-gebundenem Wasserstoff an aliphatische Mehrfachbindung haben die erfindungsgemäß verwendeten, Platin enthaltenden Zusammensetzungen insbesondere die Vorteile, daß sie leichter zugänglich sind und/oder auch bei Raumtemperatur innerhalb kürzerer Zeit ihre Wirkung entfalten, also kürzere Induktionszeiten haben, obwohl sie ebenso wie die Platin enthaltenden, bei Raumtemperatur inhibierten Zusammensetzungen von US 3 188 299, patentiert 8. Juni 1965, A. J. Chalk, General Elektric Company, wobei dieser Patentschrift FR-PS 1 389 134 entspricht, organische basische Stickstoffverbindungen enthalten. Weitere wichtige Vorteile sind diejenigen, daß die Zeit zwischen Beginn und Ende der Hydrosilylierung, also die Reaktionszeit in Gegenwart der erfindungsgemäß verwendeten, Platin enthaltenden Zusammensetzungen kürzer ist und/oder daß bei Verwendung dieser Zusammensetzungen geringere Konzentrationen an Platin wirksam sind und/oder daß die erfindungsgemäß verwendeten, Platin enthaltenden Zusammensetzungen länger wirksam sind und/oder daß in ihrer Gegenwart unerwünschte Nebenprodukte, wie Polymerisate von Ausgangsprodukten oder gewünschten Endprodukten, nicht oder in geringerem Ausmaß gebildet werden. Gemäß FR-A-1 509 761 wird das Platinhalogenid zunächst mit einer Sauerstoff enthaltenden olefinischen Verbindung, die identisch mit der zu hydrosilylierenden olefinischen Verbindung ist, und einer Spur Butylamin erwärmt und dann zu der so erhaltenen Mischung Trichlorsilan gegeben. Bei der Arbeitsweise gemäß US-A-3 925 434 wird das Platinhalogenid zu einem Gemisch aus Si-gebundenen Wasserstoff enthaltendem Silan, aliphatische Mehrfachbindung enthaltender Verbindung und bestimmten Aminen gegeben.

Gegenstand der Erfindung ist ein Verfahren zum Anlagern von Si-gebundenem Wasserstoff an aliphatische Merhfachbindung in Gegenwart eines Platinkatalysators, dadurch gekennzeichnet, daß als Platinkatalysator eine Lösung verwendet wird, die dadurch bereitet wird, daß man zunächst ein aus Platin und Halogen, gegebenenfalls neben Wasserstoff und Sauerstoff, aufgebautes Platinhalogenid in mindestens 20 Gewichtsteilen eines Olefins, das 2 bis 18 Kohlenstoffatome je Molekül enthält und nur aus Kohlenstoff- und Wasserstoffatomen aufgebaut ist, je Gewichtsteil Platinhalogenid löst und dann die so erhaltene Lösung im Gemisch mit 0,5 bis 1 Mol je Grammatom Platin primärem und/oder sekundärem Amin 10 Minuten bis 2 Stunden lang auf 40 bis 100° C erwärmt.

Zumindest bei 1,25 Mol Amin je Grammatom Platin erfolgt ein beträchtlich geringerer Temperaturanstieg bei der Hydrosilylierung als im erfindungsgemäßen Bereich. Die erfindungsgemäße Auswahl des Mengenverhältnisses von Amin zu Platin war weder durch FR-A-1 509 761 noch durch US-A-3 925 434 nahegelegt.

Als Platinhalogenid ist Platintetrachlorid bevorzugt. Weitere Beispiele für Platinhalogenide, die bei der Bereitung von erfindungsgemäß eingesetzter, Platin enthaltender Zusammensetzung eingesetzt werden können, sind Platindichlorid, Platindibromid und $H_2PtCl_6 \cdot 6 H_2O$. Es kann eine Art von Platinhalogenid verwendet werden. Es kann aber auch ein Gemisch aus verschiedenen Arten von Platinhalogeniden, z. B. aus Platintetrachlorid und $H_2PtCl_6 \cdot 6 H_2O$, verwendet werden.

Als Olefin, das nur aus Kohlenstoff- und Wasserstoffatomen aufgebaut ist, ist solches mit 6 bis 18 Kohlenstoffatomen je Molekül, bevorzugt. Besonders bevorzugt sind die verschiedenen, linearen oder verzweigten Oktene. Einzelne Beispiele für Oktene sind 1-Okten, cis-2-Okten und dimerisiertes 1-Buten. Weitere Beispiele für Olefine, die bei der Bereitung von erfindungsgemäß eingesetzter, Platin enthaltender Zusammensetzung eingesetzt werden können, sind andere lineare oder verzweigte Monoolefine mit mindestens 6 Kohlenstoffatomen als Oktene, wie 1-Nonen, 2-Nonen, 1-Hepten, 1-Dodecen und 6-Dodecen und Di- und Multiolefine mit mindestens 6 Kohlenstoffatomen, wie 1,4-Hexadien und 1,5-Cyclooktadien. Wenn bei der Bereitung der Katalysatoren die Anwendung von Druck in Kauf genommen wird, können aber auch Olefine mit 2 bis 5 Kohlenstoffatomen eingesetzt werden.

Es kann eine Art von Olefin bei der Bereitung der erfindungsgemäß verwendeten, Platin enthaltenden Zusammensetzungen eingesetzt werden. Es kann aber auch ein Gemisch aus verschiedenen Olefinen, z. B. aus verschiedenen Oktenisomeren oder aus Olefinen mit verschiedener Anzahl von Kohlenstoffatomen, bei der Bereitung der erfindungsgemäß verwendeten, Platin enthaltenden Zusammensetzungen verwendet werden.

Vorzugsweise werden bei der Bereitung der erfindungsgemäß verwendeten, Platin enthaltenden Zusammensetzungen 100 bis 2000 Volumenteile Olefin je Gewichtsteil Platinhalogenid eingesetzt.

Bei dem Lösen von Platinhalogenid in mindestens 20 Gewichtsteilen Olefin je Gewichtsteil Platinhalogenid, wobei eine Umsetzung von Olefin mit Platinhalogenid erfolgt, wird vorzugsweise 10 Minuten bis 5 Stunden auf 60 bis 120° C erwärmt.

Unter primären und sekundären Aminen werden zumindest hier in Beschreibung und Patentansprüchen solche organischen basischen Stickstoffverbindungen verstanden, bei denen an jedes Stickstoffatom zwei Wasserstoffatome gebunden sind bzw. ein Wasserstoffatom gebunden ist, wobei die nicht durch Wasserstoffatome abgesättigten Stickstoffvalenzen durch einwertige oder zweiwertige Kohlenwasserstoffreste, die gegebenenfalls durch Äthersauersoffatome oder Hydroxylgruppen substituiert sind, abgesättigt sind.

Vorzugsweise enthalten die bei der Bereitung von erfindungsgemäß eingesetzter, Platin enthaltender Zusammensetzung eingesetzten Amine 1 bis 15 Kohlenstoffatome je organischen Rest, der an Stickstoff gebunden ist. Besonders bevorzugt ist sec-Butylamin. Weitere Beispiele für Amine, die bei der Bereitung von erfindungsgemäß eingesetzter, Platin enthaltender Zusammensetzung verwendet werden können, sind Methylamin, Dimethylamin, Äthylamin, n-Propylamin, Isopropylamin, n-Butylamin, Cyclohexylamin, Anilin, p-Toluidin, Äthylendiamin, Morpholin und Diäthanolamin.

Es kann eine Art von Amin bei der Bereitung von erfindungsgemäß verwendeter, Platin enthaltender Zusammensetzung eingesetzt werden. Es kann aber auch ein Gemisch aus verschiedenen Arten von Aminen, z. B. aus sec-Butylamin und Cyclohexylamin, bei der Bereitung von erfindungsgemäß verwendeter, Platin enthaltender Zusammensetzung verwendet werden.

Das Erwärmen der zunächst aus Platinhalogenid und Olefin bereiteten Lösung erfolgt im Gemisch mit 0,5 bis 1 Mol primärem und/oder sekundärem Amin je Grammatom Platin bei 40 bis 100° C während 10 Minuten bis 2 Stunden.

Sowohl das Lösen von Platinhalogenid im Olefin als auch das Erwärmen der bei diesem Lösen erhaltenen Lösung im Gemisch mit Amin kann beim Druck der umgebenden Atmosphäre oder bei höheren oder niedrigeren Drücken erfolgen.

Die im Rahmen des erfindungsgemäßen Verfahrens beim Anlagern von Si-gebundenem Wasserstoff an aliphatische Mehrfachbindung angewendete Mengen an Katalysator können die gleichen sein wie bei den bisher bekannten Verfahren zur Anlagerung von Si-gebundenem Wasserstoff an aliphatische Mehrfachbindung in Gegenwart von Platinkatalysator. Bevorzugt sind $10^{-7}$ bis $10^{-3}$ Grammatom Platin, berechnet als elementares Platin, je Grammatom Si-gebundenen Wasserstoffs.

Die im Rahmen des erfindungsgemäßen Verfahrens beim Anlagern von Si-gebundenem Wasserstoff an aliphatische Mehrfachbindung angewandten Temperaturen und Drücke können ebenfalls die gleichen sein, wie bei den bisher bekannten Verfahren zum Anlagern von Si-gebundenem Wasserstoff an aliphatische Mehrfachbindung in Gegenwart von Platinkatalysator. Bevorzugt sind Temperaturen von 18 bis 150°C und der Druck der umgebenden Atmosphäre, also 1 bar oder etwa 1 bar. Falls erwünscht, können jedoch auch höhere oder niedrigere Drücke angewendet werden.

Das erfindungsgemäße Verfahren kann überall dort angewendet werden, wo monomere oder polymere Siliciumverbindungen mit Si-gebundenem Wasserstoff an monomere oder polymere Verbindungen mit aliphatischer Mehrfachbindung angelagert werden sollen. Bei dieser Anlagerung können je nach Wahl der aneinander anzulagernden Verbindungen andere monomere Siliciumverbindungen oder dimere bzw. polymere, Silicium enthaltende Verbindungen entstehen oder modifiziert werden.

Beispiele für die Herstellung von monomeren Siliciumverbindungen, für die das erfindungsgemäße Verfahren angewendet werden kann, sind die Herstellung von 3-Chlorpropyltrichlorsilan durch Umsetzung von Trichlorsilan mit Allylchlorid, die Herstellung von 3-Chlorpropylmethyldichlorsilan durch Umsetzung von Methyldichlorsilan mit Allylchlorid, die Herstellung von n-Propyltrichlorsilan durch Umsetzung von Propen mit Trichlorsilan, die Herstellung von gamma-Methacryloxypropyltrichlorsilan durch Umsetzung von Allylmethacrylat mit Trichlorsilan und die Herstellung von Vinylmethyldichlorsilan durch Umsetzung von Acetylen mit Methyldichlorsilan.

Die Herstellung von monomeren Organosiliciumverbindungen ist bevorzugt.

Beispiele für die Herstellung von dimeren bzw. polymeren, Silicium enthaltenden Verbindungen, für die das erfindungsgemäße Verfahren angewendet werden kann, sind die Umsetzung von Vinyltrichlorsilan mit Trichlorsilan zu Bis-(1,2-trichlorsilyl)-äthan und die Herstellung von Organosiloxanen mit SiC-gebundenen Estergruppen durch Anlagern von mindestens einem Diester der Allylbernsteinsäure an Organosiloxan mit Si-gebundenem Wasserstoff.

Zu der Modifizierung von polymeren, Silicium enthaltenden Verbindungen, für die das erfindungsgemäße Verfahren angewendet werden kann, gehört auch die Vernetzung, also Härtung oder Vulkanisation von Massen auf Grundlage von Alkenylgruppen, insbesondere Vinylgruppen und Si-gebundenen Wasserstoff enthaltenden Organopolysiloxanen. Bei solchen Massen kann es sich z. B. um Einbettungsmassen für elektrische oder elektronische Vorrichtungen oder Beschichtungsmassen, einschließlich Massen zum Herstellen von klebrige Stoffe abweisenden Überzügen, beispielsweise auf Papier, oder um Abformmassen, beispielsweise für die Herstellung von Formkörpern aus Beton oder zum Erzeugen von Abdrücken von menschlichen oder tierischen Zähnen handeln.

Selbstverständlich können auch bei dem erfindungsgemäßen Verfahren die Anlagerung von Si-gebundenem Wasserstoff an aliphatische Mehrfachbindung bei Raumtemperatur verzögernde Mittel, wie Benzotriazol, 1,3-Divinyl-1,1,3,3-tetramethyldisiloxan und/oder 2-Methyl-3-butin-2-ol, erforderlichenfalls mitverwendet werden.

## Beispiel 1

Zu Gemischen aus jeweils 0,5 Mol Trichlorsilan und 0,5 Mol Allylmethacrylat in einem gegenüber Wärmeaustausch isolierten Gefäß werden jeweils $5 \cdot 10^{-6}$ Grammatom Platin in Form von

(a) erfindungsgemäß einer Lösung, die dadurch bereitet wurde, daß zunächst 27,5 g Platintetrachlorid in 1,6 l 1-Okten 2 Stunden auf 100° C erwärmt und
dann 1 l der so erhaltenen Lösung im Gemisch mit 3,1 ml sec-Butylamin, entsprechend 0,6 Mol je Grammatom Platin, eine Stunde auf 60° C erwärmt wurde bzw.

(V₁) zum Vergleich einer Lösung, die dadurch bereitet wurde, daß 27,5 g Platintetrachlorid in 1,6 l 1-Okten 2 Stunden auf 100° C erwärmt wurde, wobei der Zusatz von Amin unterblieb, bzw.

(V₂) zum weiteren Vergleich der Katalysator-Lösung (c) gemäß US 3 798 252, Beispiel 1, gegeben.

Nach Zugabe der Katalysatoren wird der Temperaturanstieg, der durch die exotherme Anlagerung von Trichlorsilan an Allylmethacrylat erfolgt und als Maß für die Geschwindigkeit dieser Anlagerung und damit der Wirksamkeit des Katalysators anzusehen ist, beobachtet. Es werden die in Tabelle 1 angegebenen Ergebnisse erhalten:

Tabelle 1

| Kata-lysator | Temperatur °C nach folgenden Minuten | | | | | | | | | | | | | | |
|---|---|---|---|---|---|---|---|---|---|---|---|---|---|---|---|
| | 0 | 1 | 2 | 3 | 5 | 6 | 8 | 10 | 12 | 15 | 18 | 21 | 24 | 27 | 30 |
| (a) | 21° | 70° | 136° | 139° | | | | | | | | | | | |
| (V₁) | 21° | 22° | | 23° | | | | | | | | 24° | | | |
| (V₂) | 21° | 23° | | 24° | 25° | 26° | 28° | 30° | 33° | 39° | 60° | 69° | 82° | 100° | 112° |

Beim erfindungsgemäßen Verfahren ist die Anlagerung mit Erreichen des Temperaturmaximums nach 3 Minuten bei praktisch vollständigem Umsatz des Trichlorsilans bereits beendet.

## Beispiel 2

Die in Beispiel 1 beschriebene Arbeitsweise wird wiederholt mit den Abänderungen, daß anstelle der 0,5 Mol Allylmethacrylat 0,5 Mol Allylchlorid und anstelle der $5 \cdot 10^{-6}$ Grammatom Platin $5 \cdot 10^{-5}$ Grammatom Platin eingesetzt werden. Es werden die in Tabelle 2 angegebenen Ergebnisse erhalten.

Tabelle 2

| Kata-lysator | Temperatur °C nach folgenden Minuten | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 13 | 14 | 30 |
| (a) | 20° | 25° | 45° | 57° | 75° | 84° | 87° | | | | | | | |
| (V₁) | 20° | 23° | 24° | 25° | 26° | 27° | 28° | | 29° | | 30° | | 32° | 34° |
| (V₂) | 20° | 39° | 41° | 44° | 47° | 51° | 55° | 59° | 63° | 68° | 72° | 78° | 79° | |

Das erfindungsgemäß hergestellte Produkt hat nach gaschromatographischer Analyse folgende Zusammensetzung:

| | |
|---|---|
| 3-Chlorpropyltrichlorsilan | 76 Gewichtsprozent |
| Propyltrichlorsilan | 5 Gewichtsprozent |
| Allylchlorid | 2 Gewichtsprozent |
| SiCl₄ | 15 Gewichtsprozent |
| Trichlorsilan | 0 Gewichtsprozent |

**Patentansprüche**

1. Verfahren zum Anlagern von Si-gebundenem Wasserstoff an aliphatische Mehrfachbindung in Gegenwart von Platinkatalysator, dadurch gekennzeichnet, daß als Platinkatalysator eine Lösung verwendet wird, die dadurch bereitet wird, daß man zunächst ein aus Platin und Halogen, gegebenenfalls neben Wasserstoff und Sauerstoff, aufgebautes Platinhalogenid in mindestens 20 Gewichtsteilen eines Olefins, das 2 bis 18 Kohlenstoffatome je Molekül enthält und nur aus Kohlenstoff- und Wasserstoffatomen aufgebaut ist, je Gewichtsteil Platinhalogenid löst und die so erhaltene Lösung im Gemisch mit 0,5 bis 1 Mol primärem und/oder sekundärem Amin je Grammatom Platin 10 Minuten bis 2 Stunden lang auf 40 bis 100° C erwärmt.

2. Verfahren nach Anspruch 1, dadurch gekennzeichnet, daß als Platinhalogenid Platintetrachlorid verwendet wurde.

3. Verfahren nach Anspruch 1 oder 2, dadurch gekennzeichnet, daß beim Lösen von Platinhalogenid in mindestens 20 Gewichtsteilen Olefin je Gewichtsteil Platinhalogenid 10 Minuten bis 5 Stunden auf 60 bis 120° C erwärmt wurde.

4. Verfahren nach einem der Ansprüche 1 bis 3, dadurch gekennzeichnet, daß als Amin sec-Butylamin verwendet wurde.

**Claims**

1. Process for the addition of Si-bonded hydrogen to an aliphatic multiple bond in the presence of a platinum catalyst, characterised in that there is used as the platinum catalyst a solution which is prepared by first dissolving a platinum halide consisting of platinum and halogen, and optionally additionally hydrogen and oxygen, in at least 20 parts by weight of an olefin containing from 2 to 18 carbon atoms per molecule and consisting of only carbon and hydrogen atoms, per part by weight of the platinum halide, and then heating the resulting solution in admixture with from 0.5 to 1 mole of a primary and/or secondary amine per gram atom of platinum for from 10 minutes to 2 hours at from 40 to 100° C.

2. Process according to claim 1, characterised in that platinum tetrachloride was used as the platinum halide.

3. Process according to claim 1 or 2, characterised in that, during the dissolution of the platinum halide in at least 20 parts by weight of olefin per part by weight of platinum halide, the whole was heated for from 10 minutes to 5 hours at from 60 to 120° C.

4. Process according to any one of claims 1 to 3, characterised in that sec.-butylamine was used as the amine.

**Revendications**

1. Procédé pour fixer sur une liaison multiple aliphatique de l'hydrogène porté par Si, en présence d'un catalyseur au platine, procédé caractérisé en ce qu'on utilise, comme catalyseur au platine, une solution que l'on a préparée en dissolvant d'abord un halogénure de platine constitué de platine et d'un halogène et contenant aussi, éventuellement, de l'hydrogène et de l'oxygène, dans au moins 20 parties en poids, par partie en poids de l'halogénure de platine, d'une oléfine contenant de 2 à 18 atomes de carbone par molécule et constituée uniquement d'atomes de carbone et d'hydrogène, et en chauffant la solution ainsi obtenue, en mélange avec de 0,5 à 1 mol d'une amine primaire et/ou secondaire par atome-gramme de platine, pendant 10 minutes à deux heures à une température de 40 à 100° C.

2. Procédé selon la revendication 1 caractérisé en ce qu'on utilise, comme halogénure de platine, le tétrachlorure de platine.

3. Procédé selon l'une des revendications 1 et 2, caractérisé en ce que, lors de la dissolution de l'halogénure de platine dans au moins 20 parties en poids d'oléfine par partie en poids d'halogénure de platine, on chauffe pendant une durée de 10 minutes à 5 heures à une température de 60 à 120° C.

4. Procédé selon l'une quelconque des revendications 1 à 3, caractérisé en ce qu'on utilise comme amine la sec-butylamine.